# EUROPEAN PATENT APPLICATION

(11) **EP 4 776 650 A1**
(43) Date of publication of application: **15.07.2026**
(21) Application number: 23951494.6
(22) Date of filing: 06.09.2023
(51) Int. Cl.: H04R 1/10

(54) **INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: SUGA, Akito, Tokyo 108-8001 (JP)
(74) Representative: Betten & Resch
(86) International application number: PCT/JP2023/032561
(87) International publication number: WO 2025/052596

(57) **Abstract**

An information processing system includes: a first acquisition unit that acquires first echo information indicating an echo reverberating in a first ear of a target; a second acquisition unit that acquires second echo information indicating an echo reverberating in a second ear of the target; a storage unit that stores registered echo information, which indicates an echo and which is registered in advance; and an information output unit that outputs information about at least one of a relationship between the first ear and the first acquisition unit and a relationship between the second ear and the second acquisition unit, based on the registered echo information and at least one of the first echo information and the second echo information. According to such an information processing system, it is possible to prevent inconveniences regarding wearing from occurring in a terminal worn in the ear.

## Description

### Technical Field

The present disclosure relates to technical fields of an information processing system, an information processing method, and a recording medium.

### Background Art

There is known a technology/technique for performing authentication processing (so-called ear acoustic authentication) on a target, based on characteristics of an external auditory canal acquired by utilizing sound reverberation/reflection. For example, Patent Literature 1 discloses that it is determined whether or not an earphone is worn in or attached to the ear, in an authentication management apparatus that manages ear acoustic authentication.

### Citation List

### Patent Literature

Patent Literature 1: International Publication No. WO2022/195806A1

### Summary

### Technical Problem

It is an example object of the present disclosure to provide an information processing system, an information processing method, and a recording medium that are configured to prevent inconveniences regarding wearing from occurring in a terminal worn in the ear.

### Solution to Problem

An information processing system according to an example aspect of the present disclosure includes: a first acquisition unit that acquires first echo information indicating an echo reverberating in a first ear of a target; a second acquisition unit that acquires second echo information indicating an echo reverberating in a second ear of the target; a storage unit that stores registered echo information, which indicates an echo and which is registered in advance; and an information output unit that outputs information about at least one of a relationship between the first ear and the first acquisition unit and a relationship between the second ear and the second acquisition unit, based on the registered echo information and at least one of the first echo information and the second echo information.

An information processing system according to another example aspect of the present disclosure includes: an acquisition unit that acquires echo information indicating an echo reverberating in a first ear of a target; a storage unit that stores registered echo information, which indicates an echo and which is registered in advance; and an information output unit that outputs information about a relationship between the first ear and the acquisition unit, based on the registered echo information and the echo information.

An information processing method according to an example aspect of the present disclosure includes: acquiring first echo information indicating an echo reverberating in a first ear of a target, via a first acquisition unit; acquiring second echo information indicating an echo reverberating in a second ear of the target, via a second acquisition unit; and outputting information about at least one of a relationship between the first ear and the first acquisition unit and a relationship between the second ear and the second acquisition unit, based on registered echo information, which indicates an echo and which is registered in advance, and at least one of the first echo information and the second echo information.

A recording medium according to an example aspect of the present disclosure is a recording medium on which a computer program that allows execution of an information processing method is recorded, the information processing method including: acquiring first echo information indicating an echo reverberating in a first ear of a target, via a first acquisition unit; acquiring second echo information indicating an echo reverberating in a second ear of the target, via a second acquisition unit; and outputting information about at least one of a relationship between the first ear and the first acquisition unit and a relationship between the second ear and the second acquisition unit, based on registered echo information, which indicates an echo and which is registered in advance, and at least one of the first echo information and the second echo information.

### Brief Description of Drawings

[FIG. 1] FIG. 1 is a block diagram illustrating a hardware configuration of a first information processing system.
[FIG. 2] FIG. 2 is a block diagram illustrating a terminal configuration of the first information processing system.
[FIG. 3] FIG. 3 is a flowchart illustrating an operation flow in the first information processing system.
[FIG. 4] FIG. 4 is a block diagram illustrating a terminal configuration of a second information processing system.
[FIG. 5] FIG. 5 is a flowchart illustrating an operation flow in the second information processing system.
[FIG. 6] FIG. 6 is a flowchart illustrating an operation flow in a third information processing system.
[FIG. 7] FIG. 7 is a flowchart illustrating an operation flow in a fourth information processing system.
[FIG. 8] FIG. 8A to FIG. 8C are conceptual diagrams illustrating specific determination examples in the fourth information processing system.
[FIG. 9] FIG. 9 is a block diagram illustrating a terminal configuration of a fifth information processing system.
[FIG. 10] FIG. 10 is a flowchart illustrating an operation flow in the fifth information processing system.
[FIG. 11] FIG. 11 is a block diagram illustrating a terminal configuration of a sixth information processing system.
[FIG. 12] FIG. 12 is a flowchart illustrating an operation flow in the sixth information processing system.
[FIG. 13] FIG. 13 is a block diagram illustrating a plurality of types of terminals in a seventh information processing system.
[FIG. 14] FIG. 14 is a flowchart illustrating an operation flow in the seventh information processing system.
[FIG. 15] FIG. 15 is a block diagram illustrating a terminal configuration of an eighth information processing system.
[FIG. 16] FIG. 16 is a flowchart illustrating an operation flow in the eighth information processing system.

### Description of Example Embodiments

Hereinafter, an information processing system, an information processing method, and a recording medium according to example embodiments will be described with reference to the drawings.

### <First Example Embodiment>

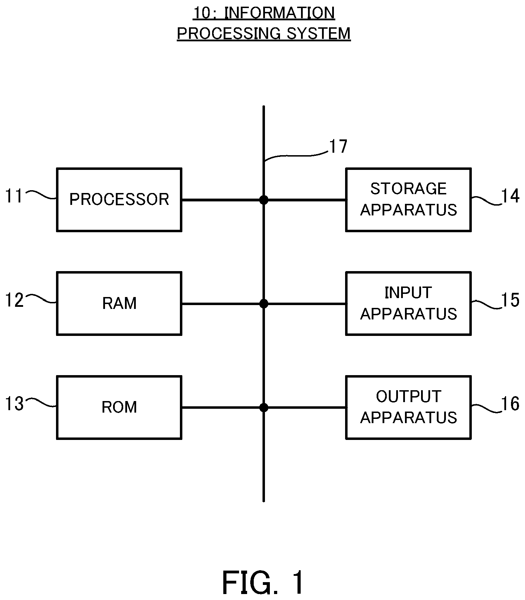

A first information processing system will be described with reference to FIG. 1 to FIG. 3.

### (Hardware Configuration)

First, a hardware configuration of the first information processing system will be described with reference to FIG. 1. FIG. 1 is a block diagram illustrating the hardware configuration of the first information processing system.

As illustrated in FIG. 1, the first information processing system 10 includes a processor 11, a RAM (Random Access Memory) 12, a ROM (Read-Only Memory) 13, and a storage apparatus 14. The first information processing system 10 may further include an input apparatus 15 and an output apparatus 16. The processor 11, the RAM 12, the ROM 13, the storage apparatus 14, the input apparatus 15, and the output apparatus 16 are connected with each other via a data bus 17. The data bus 17 may also be an interface other than a data bus (e.g., a LAN, a USB, etc.).

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium, by using a not-illustrated recording medium reading apparatus. The processor 11 may also acquire (i.e., read) a computer program from a not-illustrated apparatus disposed outside the first information processing system 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a function block for performing processing using an echo or reverberant sound inside an ear, is realized in the processor 11. That is, the processor 11 may function as a controller that performs each control in the first information processing system 10.

The processor 11 may be configured, for example, as a CPU (Central Processing Unit), a GPU (Graphics Processing Unit), a FPGA (field-programmable gate array), a DSP (Digital Signal Processor), an ASIC (Application Specific Integrated Circuit), or a quantum processor. The processor 11 may be configured by using one of them, or a plurality of them in parallel.

The RAM 12 temporarily stores the computer program to be executed by the processor 11. The RAM 12 temporarily stores data that are temporarily used by the processor 11 when the processor 11 is executing the computer program. The RAM 12 may be, for example, a D-RAM (Dynamic Random Access Memory) or a SRAM (Static Random Access Memory). In addition, another type of volatile memory may be used in place of the RAM 12.

The ROM 13 stores the computer program to be executed by the processor 11. The ROM 13 may also store other fixed data. The ROM 13 may be, for example, a P-ROM (Programmable Read Only Memory) or an EPROM (Erasable Read Only Memory). In addition, another type of nonvolatile memory may be used in place of the ROM 13.

The storage apparatus 14 stores data that are stored by the first information processing system 10 for a long time. The storage apparatus 14 may operate as a transitory storage apparatus of the processor 11. The storage apparatus may store therein the computer program to be executed by the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the first information processing system 10. The input apparatus 15 may include, for example, at least one of a keyboard, a mouse, and a touch panel. The input apparatus 15 may be configured as a part of a smartphone, a tablet terminal, an earphone-type terminal, a watch-type terminal, an eye glass-type or goggle-type HMD (Head Mounted Display) terminal, or the like. The input apparatus 15 may be an apparatus that allows audio input/voice input, including a microphone, for example.

The output apparatus 16 is an apparatus that outputs information about the first information processing system 10 to the outside. For example, the output apparatus 16 may be a display apparatus (e.g., a display) that is configured to display the information about the first information processing system 10. The output apparatus 16 may also be a speaker or the like that is configured to audio-output the information about the first information processing system 10. The output apparatus 16 may be configured as a part of a smartphone, a tablet terminal, an earphone-type terminal, a watch-type terminal, an eyeglass-type or goggle-type HMD (Head Mounted Display) terminal, or the like.

The first information processing system 10 includes a first terminal, a second terminal, and a third terminal, as described later. Each of the components described in FIG. 1 may be configured to be included in at least one of the first terminal, the second terminal, and the third terminal provided in the first information processing system 10. Furthermore, a part of the components described in FIG. 1 may be configured to be included in an external apparatus (e.g., an external server, cloud, etc.) that is different from the first terminal, the second terminal, and the third terminal.

### (Terminal Configuration)

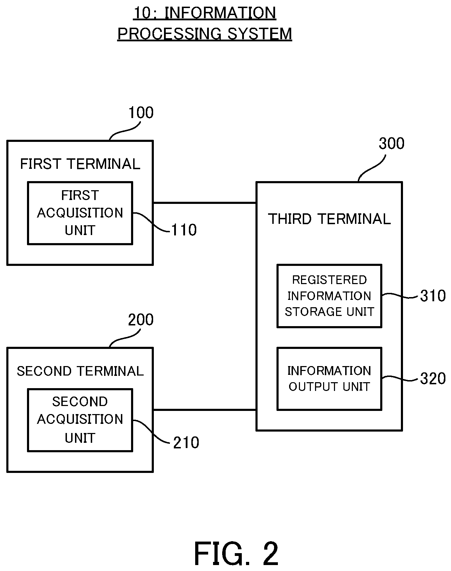

Next, with reference to FIG. 2, a terminal configuration of the first information processing system 10 will be described. FIG. 2 is a block diagram illustrating the terminal configuration of the first information processing system.

In FIG. 2, the first information processing system 10 includes a first terminal 100, a second terminal 200, and a third terminal 300. The first terminal 100 and the second terminal 200 are connected to the third terminal 300, for example, via wireless communication, and are configured to transmit and receive information to or from the third terminal 300. Furthermore, the first terminal 100 and the second terminal 200 may also be configured to transmit and receive information with each other via wireless communication or the like.

Each of the first terminal 100 and the second terminal 200 is configured, for example, as an earphone-type hearable terminal. The first terminal 100 and the second terminal 200 are configured as terminals respectively corresponding to different ears. For example, the first terminal 100 may be configured as an earphone-type terminal for a right ear, and the second terminal 200 may be configured as an earphone-type terminal for a left ear.

The first terminal 100 includes a first acquisition unit 110 as a processing block for realizing its functions. The first acquisition unit 110 is configured to acquire first echo information indicating an echo reverberating inside a first ear of a target. For example, the first acquisition unit 110 controls the first terminal 100, which is worn in the target's first ear, to acquire a first echo signal including the characteristics/features of the target's first ear (specifically, the characteristics/features of an internal shape of the ear). More specifically, the first acquisition unit 110 controls the first terminal 100 to transmit a sound wave into the target's first ear, and acquires a first echo signal based on an echo of the transmitted sound wave. On the other hand, the second terminal 200 includes a second acquisition unit 210 as a processing block for realizing its function. The second acquisition unit 210 is configured to acquire second echo information indicating an echo reverberating inside a second ear of the target, through an operation similar to that of the first acquisition unit 110 described above.

The first echo information and the second echo information (hereinafter collectively referred to as "echo information" as appropriate) may be data (e.g., waveform data) representing the echo itself. Alternatively, the echo information may be data representing a feature quantity extracted from the echo. In this case, each of the first acquisition unit 110 and the second acquisition unit 210 may have a function of extracting the feature quantity from the echo. The function of extracting the feature quantity from the echo may be provided for a component that is different from the first acquisition unit 110 and the second acquisition unit 210 (e.g., a component of the third terminal).

The third terminal 300 is configured as a portable terminal such as, for example, a smartphone, a tablet terminal, a watch-type terminal, and an eyeglass-type or goggle-type HMD terminal, or as a terminal such as a personal computer and a server. The third terminal 300 includes, as processing blocks for realizing its functions, a registered information storage unit 310 and an information output unit 320.

The registered information storage unit 310 stores registered echo information, which indicates an echo and which is registered in advance. The registered echo information may be acquired in advance from a registered user's ears using, for example, the first acquisition unit 110 and the second acquisition unit 210, and then stored. The registered information storage unit 310 may store a plurality of pieces of registered echo information. For example, the registered information storage unit 310 may separately store registered echo information corresponding to the right ear of the registered user and registered echo information corresponding to the left ear. Furthermore, the registered information storage unit 310 may store the registered echo information on each of a plurality of registered users, for each user.

The information output unit 320 is configured to output information about at least one of a relationship between the target's first ear and the first acquisition unit 110, and a relationship between the target's second ear and the second acquisition unit 210 (hereinafter referred to as "relationship information" as appropriate). The information output unit 320 is configured to output the relationship information, based on the registered echo information stored in the registered information storage unit 310 and at least one of the first echo information acquired by the first acquisition unit 110 and the second echo information acquired by the second acquisition unit 210. For example, the information output unit 320 may determine the relationship between the first ear and the first acquisition unit 110 by matching the first echo information to the registered echo information, and may output the relationship information corresponding to the determination result. Similarly, the information output unit 320 may determine the relationship between the second ear and the second acquisition unit 210 by matching the second echo information to the registered echo information, and may output the relationship information corresponding to the determination result. The relationship information may indicate whether or not the target's first ear matches an ear corresponding to the first terminal 100 equipped with the first acquisition unit 110. The relationship information may also indicate whether or not the target's second ear matches an ear corresponding to the second terminal 200 equipped with the second acquisition unit 210. A more specific example of the relationship information will be described in detail in another example embodiment later.

The information output unit 320 may display the relationship information on a display. Alternatively, the information output unit 320 may audio-output the relationship information via a speaker. Furthermore, the information output unit 320 may output the relationship information to an apparatus external to the system. In this case, the apparatus that is an output destination, may be configured to perform predetermined processing based on the relationship information.

Furthermore, the functions of the registered information storage unit 310 and the information output unit 320 described above may be provided in one of the first terminal 100 and the second terminal 200. That is, the registered information storage unit 310 and the information output unit 320 may be provided in the first terminal 100 or in the second terminal 200. In this case, the first information processing system 10 may be configured without including the third terminal 300.

### (Operation Flow)

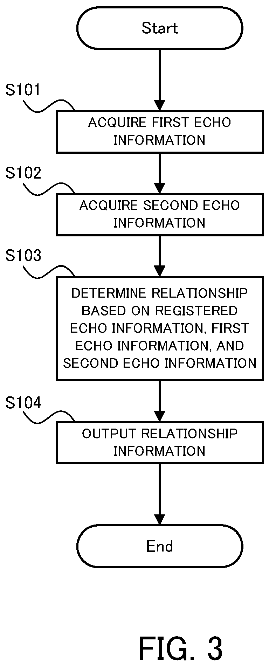

Next, with reference to FIG. 3, an operation flow in the first information processing system 10 will be described. FIG. 3 is a flowchart illustrating the operation flow in the first information processing system.

As illustrated in FIG. 3, when the operation is started in the first information processing system 10, the first acquisition unit 110 in the first terminal 100 first acquires the first echo information indicating an echo reverberating in the target's first ear (Step S101). Furthermore, the second acquisition unit 210 in the second terminal 200 acquires the second echo information indicating an echo reverberating in the target's second ear (Step S102). Note that the aforementioned Steps S101 and S102 may be performed sequentially in any order or simultaneously in parallel. Each of the first echo information and the second echo information is outputted to the information output unit 320 in the third terminal 300.

Then, the information output unit 320 determines at least one of the relationship between the target's first ear and the first acquisition unit 110, and the relationship between the target's second ear and the second acquisition unit 210 (Step S103). The information output unit 320 determines the aforementioned relationship, based on the registered echo information stored in the registered information storage unit 310 and at least one of the first echo information acquired by the first acquisition unit 110 and the second echo information acquired by the second acquisition unit 210. The information output unit 320 then outputs the relationship information corresponding to the determination result regarding the relationship (Step S104).

### (Technical Effect)

Next, a technical effect obtained by the first information processing system 10 will be described.

As described in FIG. 1 to FIG. 3, in the first information processing system 10, outputted is at least one of the relationship information about the relationship between the first ear and the first acquisition unit 110, and the relationship information about the relationship between the second ear and the second acquisition unit 210. In a case where the echo information is acquired from the target's ear, there may be inconveniences depending on the relationship between the target's ears and the first acquisition unit 110 and the second acquisition unit 210. For example, in a case where the target's ears do not correspond to the first acquisition unit 110 and the second acquisition unit 210, it may be hardly possible to normally acquire the echo signal or to normally perform various types of processing using the echo signal. However, in the first information processing system 10, as described above, the relationship information is outputted based on the echo signal, which makes it easy to understand the relationship between the first ear and the first acquisition unit 110, and the relationship between the second ear and the second acquisition unit 210. Therefore, it is possible to prompt actions appropriate to a current relationship (e.g., operations or actions to correct an inappropriate relationship, etc.).

### <Second Example Embodiment>

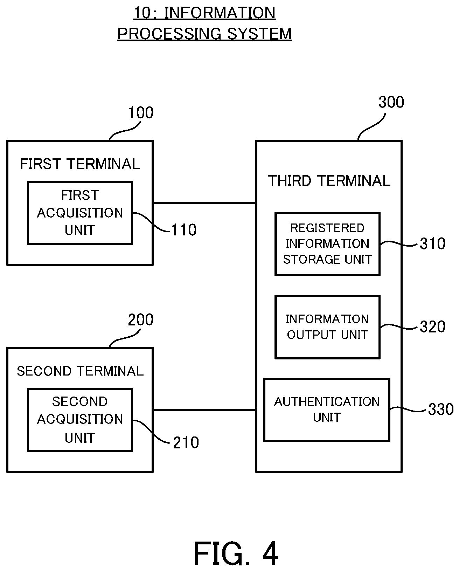

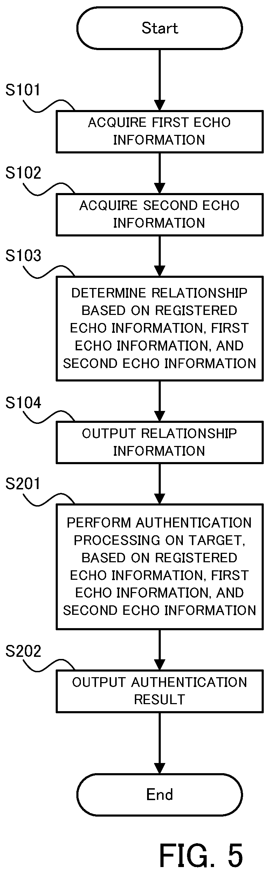

A second information processing system 10 will be described with reference to FIG. 4 and FIG. 5. Note that the second information processing system 10 partially differs from the first information processing system 10 described above only in its configuration and operation, and may be the same as the first information processing system 10 in the other parts. Therefore, the following description will focus on the parts differing from the first example embodiment, omitting explanations for other overlapping parts as appropriate.

### (Terminal Configuration)

First, with reference to FIG. 4, a terminal configuration of the second information processing system 10 will be described. FIG. 4 is a block diagram illustrating the terminal configuration of the second information processing system. Note that in FIG. 4, the same reference numerals are used for the same components as those illustrated in FIG. 2.

In FIG. 4, the second information processing system 10 includes the first terminal 100, the second terminal 200, and the third terminal 300. The third terminal 300 in the second information processing system 10 includes, as processing blocks for realizing its functions, the registered information storage unit 310, the information output unit 320, and an authentication unit 330. That is, the third terminal 300 in the second information processing system 10 further includes the authentication unit 330 in addition to the configuration described in the first example embodiment (see FIG. 2).

The authentication unit 330 is configured to perform authentication processing on the target, based on the registered echo information and at least one of the first echo information and the second echo information. That is, the authentication unit 330 is configured to perform ear acoustic authentication using the echo information. The authentication unit 330 may perform the authentication processing on the target, for example, by matching the first echo information to the registered echo information corresponding to the first ear, and matching the second echo information to the registered echo information corresponding to the second ear. The authentication unit 330 may determine whether or not the target can be authenticated, by compairing a matching score calculated from a matching result (i.e., a score indicating a degree of match) with a preset authentication threshold. For example, the authentication unit 330 may determine that the authentication processing for the target is successful in a case where the matching score is higher than the authentication threshold. Furthermore, the authentication unit 330 may determine that the authentication processing for the target is failed in a case where the matching score is lower than the authentication threshold.

The authentication unit 330 may also have a function of outputting a result of the authentication processing for the target. For example, the authentication unit 330 may be configured to display the authentication result on a display or audio-output it via a speaker. Furthermore, the authentication unit 330 may permit a predetermined operation on the third terminal 300, in a case where the authentication processing for the target is successful. The predetermined operation may include all operations that are executable on the third terminal 300, or may be limited to a part of the operations that are executable on the third terminal 300. For example, in a case where the third terminal 300 is configured as a smartphone, it may be configured such that a lock screen of the smartphone is unlocked on the condition that the authentication processing for the target is successful. Alternatively, it may be configured such that a specific application on the smartphone is usable on the condition that the authentication processing for the target is successful.

Furthermore, the authentication processing performed by the authentication unit 330 and the relationship determination processing performed by the information output unit 320 may be processing in which at least some of processes are in common. For example, the authentication processing for the target and the relationship determination processing may be simultaneously performed, by matching the first and second echo information to the registered echo information. In this case, the authentication unit 330 may be provided as a part of the information output unit 320.

### (Operation Flow)

Next, with reference to FIG. 5, an operation flow in the second information processing system 10 will be described. FIG. 5 is a flowchart illustrating the operation flow in the second information processing system. Note that in FIG. 5, the same reference numerals are used for the same steps as those illustrated in FIG. 3.

As illustrated in FIG. 5, when the operation by the second information processing system 10 is started, the first acquisition unit 110 in the first terminal 100 first acquires the first echo information indicating an echo reverberating in the target's first ear (Step S101). Furthermore, the second acquisition unit 210 in the second terminal 200 acquires the second echo information indicating an echo reverberating in the target's second ear (Step S102).

Then, the information output unit 320 determines at least one of the relationship between the target's first ear and the first acquisition unit 110, and the relationship between the target's second ear and the second acquisition unit 210 (Step S103). The information output unit 320 then outputs the relationship information corresponding to the determination result regarding the relationship (Step S104).

Subsequently, the authentication unit 330 performs the authentication processing on the target, based on the registered echo information and at least one of the first echo information and the second echo information (step S201). The authentication unit 330 then outputs the authentication result (step S202).

The processing of outputting the relationship by the information output unit 320 and the authentication processing for the target by the authentication unit 330 may be performed sequentially in any order. That is, the steps S103 and S104 and the steps S201 and S202 may be performed sequentially in any order. Furthermore, as already described, the processing of outputting the relationship by the information output unit 320 and the authentication processing for the target by the authentication unit 330 may be performed simultaneously as common processing. That is, the steps S103 and S104 and the steps S201 and S202 may be performed simultaneously.

### (Technical Effect)

Next, a technical effect obtained by the second information processing system 10 will be described.

As described in FIG. 4 and FIG. 5, in the second information processing system 10, the authentication processing is performed on the target, using the echo information. This enables the execution of the authentication processing for the target while outputting the relationship information. Furthermore, since both the information used to output the relationship information and the information used for the authentication processing for the target are the echo information, it is possible to efficiently perform various types of processing, collectively, without using different types of information.

### <Third Example Embodiment>

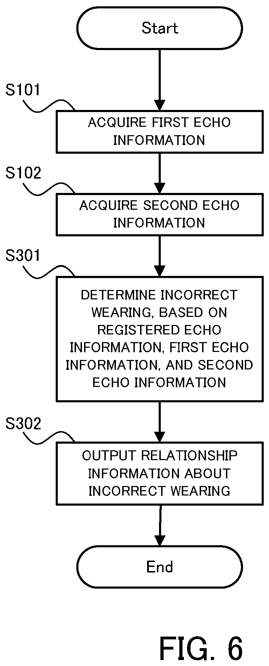

A third information processing system 10 will be described with reference to FIG. 6. The third information processing system 10 partially differs from the first and second information processing systems 10 described above only in its operation, and may be the same as the first and second information processing systems 10 in the other parts. Therefore, the following description will focus on the parts differing from the already described example embodiments, omitting explanations for other overlapping parts as appropriate.

### (Operation Flow)

First, with reference to FIG. 6, an operation flow in the third information processing system 10 will be described. FIG. 6 is a flowchart illustrating the operation flow in the third information processing system. In FIG. 6, the same reference numerals are used for the same steps as those illustrated in FIG. 3.

As illustrated in FIG. 6, when the operation is started in the third information processing system 10, the first acquisition unit 110 in the first terminal 100 first acquires the first echo information indicating an echo reverberating in the target's first ear (Step S101). Furthermore, the second acquisition unit 210 in the second terminal 200 acquires the second echo information indicating an echo reverberating in the target's second ear (Step S102).

Then, the information output unit 320 determines incorrect wearing of the first terminal 100 and the second terminal 200, based on the registered echo information stored in the registered information storage unit 310 and at least one of the first echo information acquired by the first acquisition unit 110 and the second echo information acquired by the second acquisition unit 210 (Step S301). The information output unit 320 then outputs information about the incorrect wearing, based on the determination result (Step S302).

As described above, the information output apparatus 320 in the third information processing system 10 outputs the information about the incorrect wearing of the first terminal 100 and the second terminal 200, as the relationship information. Here, the "incorrect wearing" refers to a state where the first terminal 100 and the second terminal 200 are not worn in the corresponding ears (e.g., they are worn in the wrong ears).

The information output unit 320 may determine the incorrect wearing, for example, by matching the first echo information to the registered echo information corresponding to the first ear, and matching the second echo information to the registered echo information corresponding to the second ear. More specifically, in a case where the first echo information does not match the registered echo information corresponding to the first ear, or in a case where the second echo information does not match the registered echo information corresponding to the second ear, it may be determined that the first terminal 100 and the second terminal 200 are incorrectly worn. A more specific method for determining the incorrect wearing will be described in another example embodiment later.

The information output unit 320 may output information indicating "wearing incorrectly" in a case where it determines that the terminals are incorrectly worn. The information output unit 320 may output information indicating "not wearing incorrectly" in a case where it determines that the terminals are not incorrectly worn. Alternatively, the information output unit 320 may output the information about the incorrect wearing in a case where it determines that the terminals are incorrectly worn, and may not output the information about the incorrect wearing in a case where it determines that the terminals are not incorrectly worn. Furthermore, the information output unit 320 may output information prompting a user to correct the incorrect wearing (e.g., a message such as "Please switch the left and right terminals") in a case where it determines that the terminals are incorrectly worn.

### (Technical Effect)

Next, a technical effect obtained by the third information processing system 10 will be described.

As described in FIG. 6, in the third information processing system 10, outputted is the information about the incorrect wearing of the first terminal 100 and the second terminal 200. This makes it easy to identify the incorrect wearing of the first terminal 100 and the second terminal 200. Consequently, it is possible to prevent/control the inconveniences caused by the incorrect wearing of the first terminal 100 and the second terminal 200.

### <Fourth Example Embodiment>

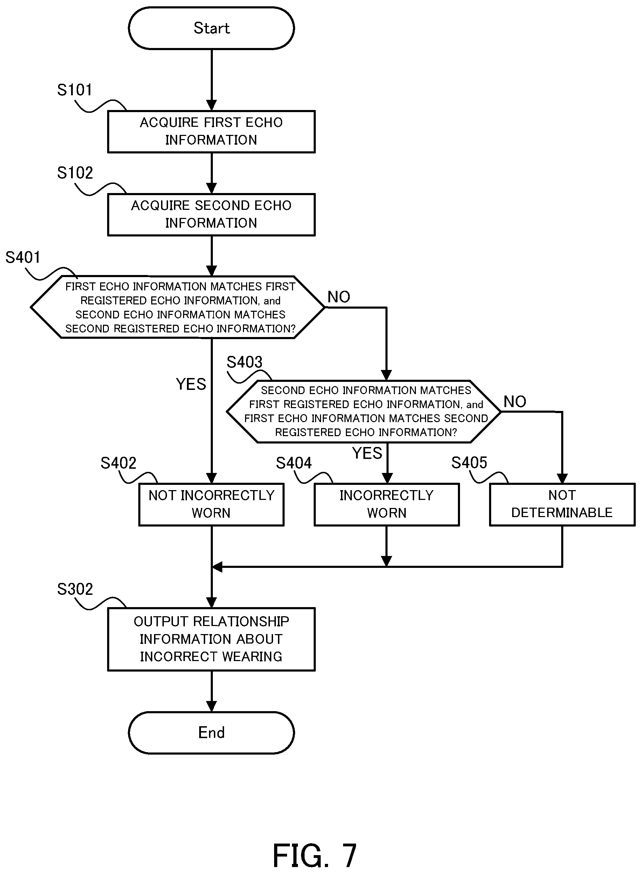

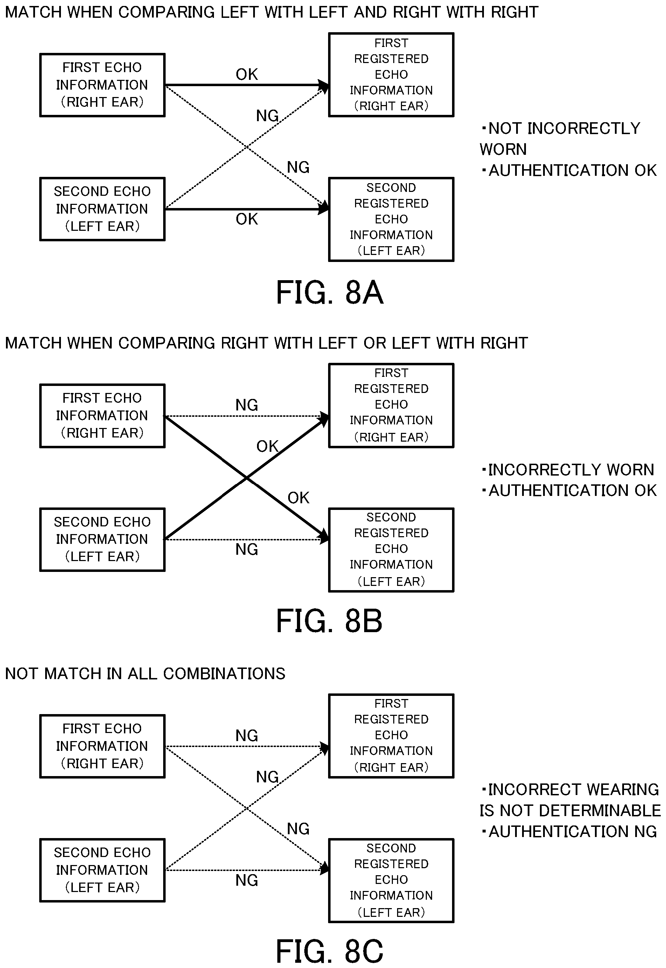

A fourth information processing system 10 will be described with reference to FIG. 7 and FIG. 8A to FIG. 8C. Note that the fourth information processing system 10 partially differs from the third information processing system 10 described above only in its operation, and may be the same as the first to third information processing systems 10 in the other parts. Therefore, the following description will focus on the parts differing from the already described example embodiments, omitting explanations for other overlapping parts as appropriate.

### (Operation Flow)

First, with reference to FIG. 7, an operation flow in the fourth information processing system 10 will be described. FIG. 7 is a flowchart illustrating the operation flow in the fourth information processing system. Note that in FIG. 7, the same reference numerals are used for the same steps as those illustrated in FIG. 6.

As illustrated in FIG. 7, when the operation is started in the fourth information processing system 10, the first acquisition unit 110 in the first terminal 100 first acquires the first echo information indicating an echo reverberating in the target's first ear (Step S101). Furthermore, the second acquisition unit 210 in the second terminal 200 acquires the second echo information indicating an echo reverberating in the target's second ear (Step S102).

Then, the information output unit 320 determines whether or not the first echo information acquired by the first acquisition unit 110 matches first registered echo information corresponding to the first ear, and whether or not the second echo information acquired by the second acquisition unit 210 matches second registered echo information corresponding to the second ear (Step S401). In a case where the first echo information acquired by the first acquisition unit 110 matches the first registered echo information corresponding to the first ear, and the second echo information acquired by the second acquisition unit 210 matches the second registered echo information corresponding to the second ear (Step S401: YES), the information output unit 320 determines that that the terminals are not incorrectly worn (Step S402). That is, the information output unit 320 determines that the first terminal 100 and the second terminal 200 are worn in their corresponding ears.

On the other hand, in a case where the first echo information acquired by the first acquisition unit 110 does not match the first registered echo information corresponding to the first ear, or the second echo information acquired by the second acquisition unit 210 does not match the second registered echo information corresponding to the second ear (Step S401: NO), the information output unit 320 determines whether or not the second echo information acquired by the second acquisition unit 210 matches the first registered echo information corresponding to the first ear, and whether or not the first echo information acquired by the first acquisition unit 110 matches the second registered echo information corresponding to the second ear (Step S403). In a case where the second echo information acquired by the second acquisition unit 210 matches the first registered echo information corresponding to the first ear, and the first echo information acquired by the first acquisition unit 110 matches the second registered echo information corresponding to the second ear (Step S403: YES), the information output unit 320 determines that the terminals are incorrectly worn (Step S404). That is, the information output unit 320 determines that the first terminal 100 and the second terminal 200 are worn in the opposite ears from their corresponding ears.

On the other hand, in a case where the second echo information acquired by the second acquisition unit 210 does not match the first registered echo information corresponding to the first ear, or the first echo information acquired by the first acquisition unit 110 does not match the second registered echo information corresponding to the second ear (Step S403: NO), the information output unit 320 determines that it is hardly possible to determine the incorrect wearing (Step S405). However, in this case, although it is hardly possible to determine whether the terminals are worn in the wrong ears, it is certain that the first terminal 100 and the second terminal 200 are not correctly worn. Therefore, the information output unit 320 may determine that the terminals are incorrectly worn.

Finally, the information output unit 320 outputs the information about the incorrect wearing, based on the determination result described above (Step S302). Note that the information output unit 320 may omit to output the information about the incorrect wearing in a case where it determines that the terminals are not incorrectly worn. Furthermore, the information output unit 320 may issue an alert in a case where it determines that the terminals are incorrectly worn or in a case where it determines that the incorrect wearing is not determinable.

### (Specific Determination Example)

Next, with reference to FIG. 8A to FIG. 8C, specific examples of determining the relationship in the fourth information processing system 10 will be described. FIG. 8A to FIG. 8C are conceptual diagrams illustrating the specific determination examples in the fourth information processing system. The following describes an example in which the relationship determination processing is performed concurrently with the authentication processing for the target (see the second example embodiment).

As illustrated in FIG. 8A to FIG. 8C, a description will be given of a case where the first echo information is the echo information acquired from the target's right ear, the second echo information is the echo information acquired from the target's left ear, the first registered echo information is the registered echo information corresponding to the target's right ear, and the second registered echo information is the registered echo information corresponding to the target's left ear.

In the example illustrated in FIG. 8A, the first echo information matches the first registered echo information, and the second echo information matches the second registered echo information. Furthermore, the first echo information does not match the second registered echo information, and the second echo information does not match the first registered echo information. In this example, the echo information and the registered echo information match when comparing left with left and right with right (i.e., when the first echo information is compared with the first registered echo information, etc.), but they do not match when comparing right with left or left with right (i.e., when the first echo information is compared with the second registered echo information, etc.). In this case, the information output unit 320 determines that the terminals are not incorrectly worn. Furthermore, since the echo information and the registered echo information match, the authentication unit 330 determines that authentication is successful.

In the example illustrated in FIG. 8B, the first echo information does not match the first registered echo information, and the second echo information does not match the second registered echo information. On the other hand, the first echo information matches the second registered echo information, and the second echo information matches the first registered echo information. In this example, the echo information and the registered echo information do not match when comparing left with left and right with right, but they match when comparing right with left or left with right. In this case, the information output unit 320 determines that the terminals are incorrectly worn (i.e., they are incorrectly worn with the left and right sides reversed). Furthermore, since the echo information and the registered echo information match, the authentication unit 330 determines that authentication is successful.

In the example illustrated in FIG. 8C, the first echo information does not match the first registered echo information, and the second echo information does not match the second registered echo information. Furthermore, the first echo information does not match the second registered echo information, and the second echo information does not match the first registered echo information. In this example, the echo information does not match the registered echo information in all combinations. In this case, the information output unit 320 determines that the incorrect wearing is not determinable. Furthermore, since the echo information does not match the registered echo information, the authentication unit 330 determines that the authentication is failed.

### (Technical Effect)

Next, a technical effect obtained by the fourth information processing system 10 will be described.

As described in FIG. 7 and FIG. 8, in the fourth information processing system 10, the incorrect wearing of the first terminal 100 and the second terminal 200 is determined by performing the matching/collation with the first echo information and the second echo information reversed. This enables the incorrect wearing of the first terminal 100 and the second terminal 200 to be determined easily and accurately.

### <Fifth Example Embodiment>

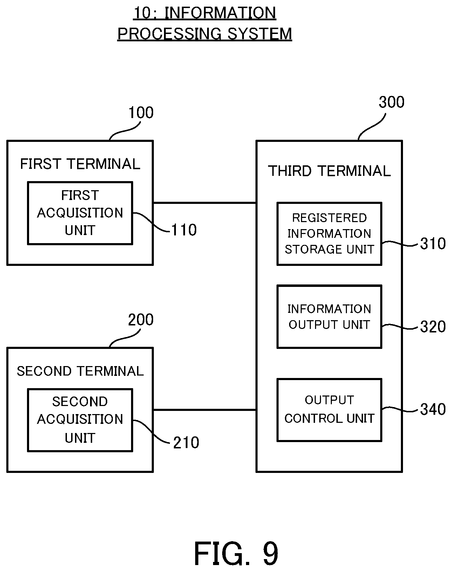

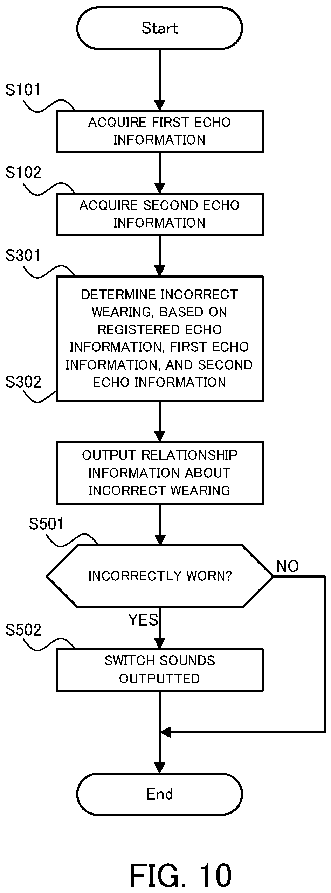

A fifth information processing system 10 will be described with reference to FIG. 9 and FIG. 10. Note that the fifth information processing system 10 partially differs from the third information processing system 10 described above only in its configuration and operation, and may be the same as the first to fourth information processing systems 10 in the other parts. Therefore, the following description will detail only the parts differing from the already described example embodiments, omitting explanations for other overlapping parts as appropriate.

### (Terminal Configuration)

First, with reference to FIG. 9, a terminal configuration of the fifth information processing system 10 will be described. FIG. 9 is a block diagram illustrating the configurations of the first terminal and the second terminal in the fifth information processing system. Note that in FIG. 9, the same reference numerals are used for the same components as those illustrated in FIG. 4.

As illustrated in FIG. 9, the fifth information processing system 10 includes the first terminal 100, the second terminal 200, and the third terminal 300. The third terminal 300 in the fifth information processing system 10 includes, as processing blocks for realizing its functions, the registered information storage unit 310, the information output unit 320, and an output control unit 340. That is, the third terminal 300 in the fifth information processing system 10 further includes the output control unit 340 in addition to the configuration described in the first example embodiment (see FIG. 2).

Each of the first terminal 100 and the second terminal 200 in the fifth information processing system 10 has a function of outputting sound. In a case where the information output unit 320 outputs the information indicating wearing incorrectly, the output control unit 340 controls a sound outputted from the first terminal 100 and a sound outputted from the second terminal 200 to be switched with each other. Specifically, the output control unit 340 may control the sound that is being outputted from the first terminal 100 to be outputted from the second terminal 200 instead, and the sound that is being outputted from the second terminal 200 to be outputted from the first terminal 100.

### (Operation Flow)

Next, with reference to FIG. 10, an operation flow in the fifth information processing system 10 will be described. FIG. 10 is a flowchart illustrating the operation flow in the fifth information processing system. Note that in FIG. 10, the same reference numerals are used for the same steps as those illustrated in FIG. 6.

As illustrated in FIG. 10, when the operation is started in the fifth information processing system 10, the first acquisition unit 110 in the first terminal 100 first acquires the first echo information indicating an echo reverberating in the target's first ear (Step S101). Furthermore, the second acquisition unit 210 in the second terminal 200 acquires the second echo information indicating an echo reverberating in the target's second ear (Step S102).

Then, the information output unit 320 determines the incorrect wearing of the first terminal 100 and the second terminal 200, based on the registered echo information stored in the registered information storage unit 310 and at least one of the first echo information acquired by the first acquisition unit 110 and the second echo information acquired by the second acquisition unit 210 (Step S301). The information output unit 320 then outputs information about the incorrect wearing, based on the determination result (Step S302).

Then, the output control unit 340 determines whether or not the terminals are incorrectly worn, based on the information about the incorrect wearing outputted by the information output unit 320 (Step S501). In a case where it determines that the terminals are incorrectly worn (Step S501: YES), the output control unit 340 controls the sound outputted from the first terminal 100 and the sound outputted from the second terminal 200 to be switched with each other (Step S502). On the other hand, in a case where it is determined that the terminals are not incorrectly worn (Step S501: NO), the Step S502 is omitted. That is, the output control unit 340 does not control the sound outputted from the first terminal 100 and the sound outputted from the second terminal 200 to be switched with each other.

### (Technical Effect)

Next, a technical effect obtained by the fifth information processing system 10 will be described.

As described in FIG. 9 and FIG. 10, in the fifth information processing system 10, in a case where the terminals are incorrectly worn, the sound outputted from the first terminal 100 and the sound outputted from the second terminal 200 are switched with each other. This ensures that even if the terminals are incorrectly worn, the sound intended for the first ear is outputted to the first ear, and the sound intended for the second ear is outputted to the second ear. This technical effect is particularly pronounced in a case where the first terminal 100 and the second terminal 200 output different sounds (e.g., in a case of outputting stereo sound or 3D audio, etc.).

### <Sixth Example Embodiment>

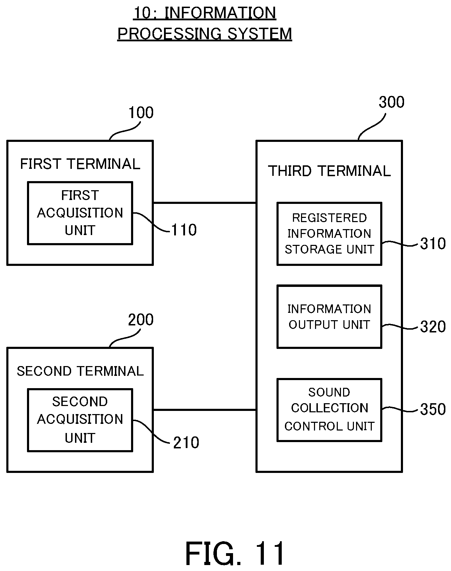

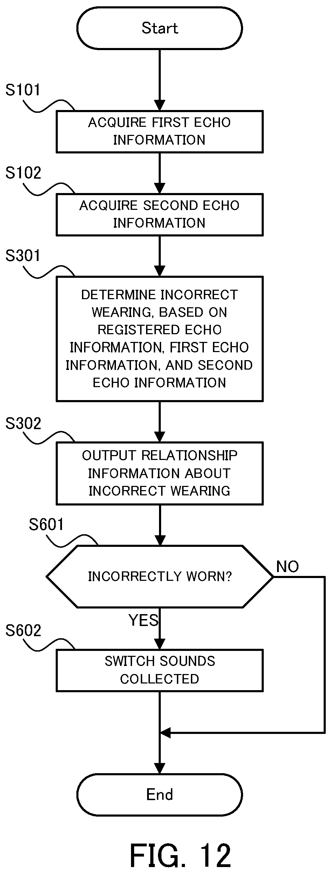

A sixth information processing system 10 will be described with reference to FIG. 11 and FIG. 12. Note that the sixth information processing system 10 partially differs from the third information processing system 10 described above only in its configuration and operation, and may be the same as the first to fifth information processing systems 10 in the other parts. Therefore, the following description will detail only the parts differing from the already described example embodiments, omitting explanations for other overlapping parts as appropriate.

### (Terminal Configuration)

First, with reference to FIG. 11, a terminal configuration of the sixth information processing system 10 will be described. FIG. 11 is a block diagram illustrating the configurations of the first terminal and the second terminal in the sixth information processing system. Note that in FIG. 11, the same reference numerals are used for the same components as those illustrated in FIG. 4.

As illustrated in FIG. 11, the sixth information processing system 10 includes the first terminal 100, the second terminal 200, and the third terminal 300. The third terminal 300 in the sixth information processing system 10 includes, as processing blocks for realizing its functions, the registered information storage unit 310, the information output unit 320, and a sound collection control unit 350. That is, the third terminal 300 in the sixth information processing system 10 further includes the sound collection control unit 350 in addition to the configuration described in the first example embodiment (see FIG. 2).

Each of the first terminal 100 and the second terminal 200 in the sixth information processing system 10 has a function of collecting sound. In a case where the information output unit 320 outputs the information indicating wearing incorrectly, the sound collection control unit 350 controls a sound collected from the first terminal 100 and a sound collected from the second terminal 200 to be switched with each other. Specifically, the sound collection control unit 350 may control the sound collected from the first terminal 100 to be treated as if it were collected from the second terminal 200, and the sound collected from the second terminal 200 to be treated as if it were collected from the first terminal 100.

### (Operation Flow)

Next, with reference to FIG. 12, an operation flow in the sixth information processing system 10 will be described. FIG. 12 is a flowchart illustrating the operation flow in the sixth information processing system. Note that in FIG. 12, the same reference numerals are used for the same steps as those illustrated in FIG. 6.

As illustrated in FIG. 12, when the operation is started in the sixth information processing system 10, the first acquisition unit 110 in the first terminal 100 first acquires the first echo information indicating an echo reverberating in the target's first ear (Step S101). Furthermore, the second acquisition unit 210 in the second terminal 200 acquires the second echo information indicating an echo reverberating in the target's second ear (Step S102).

Then, the information output unit 320 determines the incorrect wearing of the first terminal 100 and the second terminal 200, based on the registered echo information stored in the registered information storage unit 310 and at least one of the first echo information acquired by the first acquisition unit 110 and the second echo information acquired by the second acquisition unit 210 (Step S301). The information output unit 320 then outputs information about the incorrect wearing, based on the determination result (Step S302).

Then, the sound collection control unit 350 determines whether or not the terminals are incorrectly worn, based on the information about the incorrect wearing outputted by the information output unit 320 (Step S601). In a case where it determines that the terminals are incorrectly worn (Step S601: YES), the sound collection control unit 350 controls the sound collected from the first terminal 100 and the sound collected from the second terminal 200 to be switched with each other (Step S602). On the other hand, in a case where it is determined that the terminals are not incorrectly worn (Step S601: NO), the Step S602 is omitted. That is, the sound collection control unit 350 does not control the sound collected from the first terminal 100 and the sound collected from the second terminal 200 to be switched with each other.

### (Technical Effect)

Next, a technical effect obtained by the sixth information processing system 10 will be described.

As described in FIG. 11 and FIG. 12, in the sixth information processing system 10, in a case where the terminals are incorrectly worn, the sound collected from the first terminal 100 and the sound collected from the second terminal 200 are switched with each other. This prevents the sound collected from the first ear side and the sound collected from the second ear side from being reversed, even if the terminals are incorrectly worn. This technical effect is particularly pronounced in a case where the first terminal 100 and the second terminal 200 collect different sounds (e.g., in a case of collecting sound as stereo sound or 3D audio, etc.).

Furthermore, the configuration described in the fifth example embodiment and the configuration described in the sixth example embodiment may be used in combination. That is, in a case where the terminals are incorrectly worn, the sound outputted from the first terminal 100 and the sound outputted from the second terminal 200 may be controlled to be switched with each other, and the sound collected from the first terminal 100 and the sound collected from the second terminal 200 may also be controlled to be switched with each other.

### <Seventh Example Embodiment>

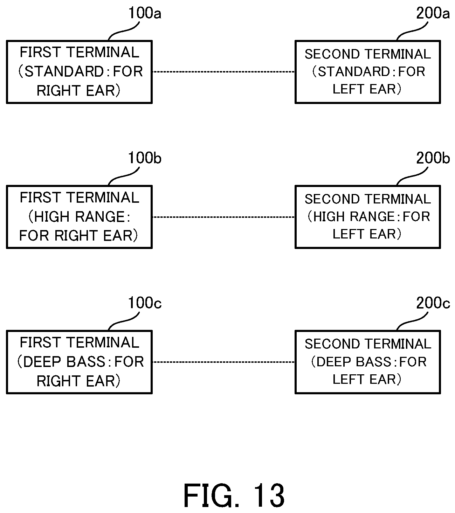

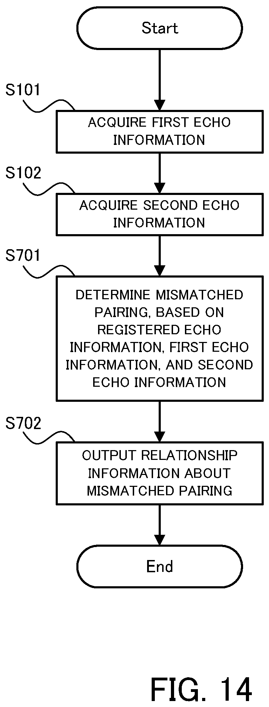

A seventh information processing system 10 will be described with reference to FIG. 13 and FIG. 14. Note that the seventh information processing system 10 partially differs from the first to sixth information processing systems 10 described above only in its configuration and operation, and may be the same as the first to sixth information processing systems 10 in the other parts. Therefore, the following description will focus on the parts differing from the already described example embodiments, omitting explanations for other overlapping parts as appropriate.

### (Plurality of Types of Terminal Configurations)

First, with reference to FIG. 13, a plurality of terminals provided in the seventh information processing system 10 will be described. FIG. 13 is a block diagram illustrating a plurality of types of terminals in the seventh information processing system.

As illustrated in FIG. 13, the seventh information processing system 10 includes a plurality of types of first terminals 100 and second terminals 200. Specifically, the seventh information processing system 10 includes: a pair of a first terminal 100a, which is standard for the right ear, and a second terminal 200a, which is standard for the left ear; a pair of a first terminal 100b, which is strong in the high range for the right ear, and a second terminal 200b, which is strong in the high range for the left ear, and a pair of a first terminal 100c, which is strong against (or capable of handling) deep bass for the right ear, and a second terminal 200c, which is strong against (or capable of handling) deep bass for the left ear.

Although described here is an example including three pairs of first terminals 100 and the second terminals 200, the number of the pairs of first terminals 100 and the second terminals 200 is not specifically limited. Furthermore, while the example given here uses the pairs of first terminals 100 and the second terminals 200 that are selected based on a sound range or frequency range, the pairs of first terminals 100 and second terminals 200 may have any characteristics.

The plurality of types of first terminals 100 and the second terminals 200 described above are preferably used in suitable pairs. For example, the first terminal 100a, which is standard for the right ear, is preferably used together with the second terminal 200a, which is standard for the left ear. Furthermore, the first terminal 100b, which is strong in the high range for the right ear, is preferably used together with the second terminal 200b, which is strong in the high range for the left ear. The first terminal 100c, which is strong against (or capable of handling) deep bass for the right ear, is preferably used together with the second terminal 200c, which is strong against (or capable of handling) deep bass for the left ear.

Therefore, the information output unit 320 in the seventh information processing system 10 determines a state where the plurality of types of first terminals 100 and the second terminals 200 are used in mismatched pairs. For example, the information output unit 320 determines a state where the first terminal 100a, which is standard for the right ear, is worn in the target's right ear, while the second terminal 200b, which is strong in the high range for the left ear, or the second terminal 200c, which is strong against (or capable of handling) deep bass for the left ear, is worn in the target's left ear.

The information output unit 320 determines the mismatched pairing described above, based on the registered echo information, the first echo information, and the second echo information. For this purpose, for example, the registered information storage unit 310 may store a different piece of registered echo information for each terminal. For example, the registered information storage unit 310 stores pieces of echo information acquired from the first terminals 100a, 100b, and 100c, and the second terminals 200a, 200b, and 200c, as different pieces of registered echo information. The echo information varies depending on the acquiring terminal, even when acquired from the same ear of the same target. Therefore, storing the registered echo information for each terminal makes it possible to determine which type of terminal is worn. Consequently, it is possible to determine the mismatched pairing of the first terminal 100 and the second terminal 200.

### (Operation Flow)

Next, with reference to FIG. 14, an operation flow in the seventh information processing system 10 will be described. FIG. 14 is a flowchart illustrating the operation flow in the seventh information processing system. Note that in FIG. 14, the same reference numerals are used for the same steps as those illustrated in FIG. 3.

As illustrated in FIG. 14, when the operation is started in the seventh information processing system 10, the first acquisition unit 110 in the first terminal 100 first acquires the first echo information indicating an echo reverberating in the target's first ear (Step S101). Furthermore, the second acquisition unit 210 in the second terminal 200 acquires the second echo information indicating an echo reverberating in the target's second ear (Step S102).

Then, the information output unit 320 determines the mismatched pairing of the first terminal 100 and the second terminal 200, based on the registered echo information stored in the registered information storage unit 310 and at least one of the first echo information acquired by the first acquisition unit 110 and the second echo information acquired by the second acquisition unit 210 (Step S701). Then, the information output unit 320 outputs information about the mismatched pairing, based on the determination result (Step S702).

The information output unit 320 may output information indicating "mismatched pairing" in a case where it determines that the terminals are used in mismatched pairs. The information output unit 320 may output information indicating "no mismatched pairing" in a case where it determines that the terminals are not used in mismatched pairs. Alternatively, the information output unit 320 may output the information about mismatched pairing in a case where it determines that the terminals are used in mismatched pairs, and may not output the information about mismatched pairing in a case where it determines that the terminals are not used in mismatched pairs. Furthermore, the information output unit 320 may output information prompting a user to correct the mismatched pairing (e.g., a message such as "Please switch the left-ear terminal with one for high range") in a case where it determines that the terminals are not used in mismatched pairs.

### (Technical Effect)

Next, a technical effect obtained by the seventh information processing system 10 will be described.

As described in FIG. 13 and FIG. 14, in the seventh information processing system 10, the mismatched pairing of the first terminal 100 and the second terminal 200 is determined based on the echo signal. This prevents the terminals from being used in inappropriate combinations, when there are a plurality of types of first terminals 100 and second terminals 200.

### <Eighth Example Embodiment>

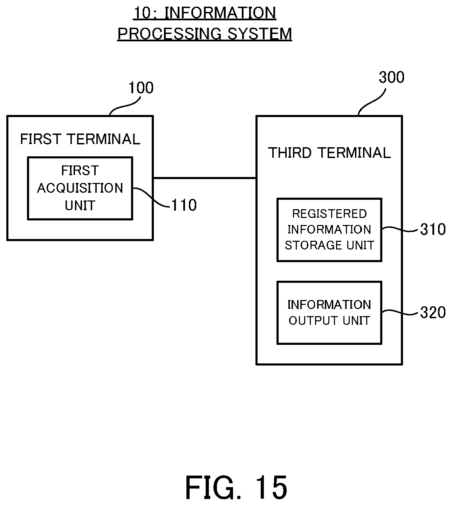

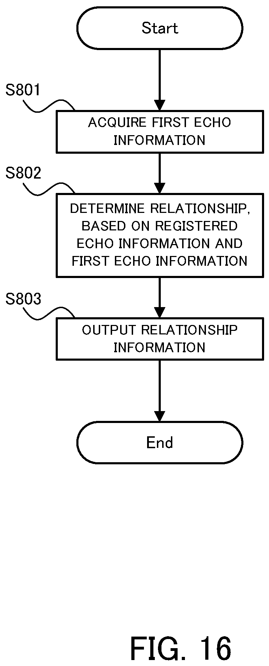

An eighth information processing system 10 will be described with reference to FIG. 15 and FIG. 16. Note that the eighth information processing system 10 partially differs from the first to seventh information processing systems 10 only in its configuration and operation, and may be the same as the first to seventh information processing systems 10 in the other parts. Therefore, the following description will focus on the parts differing from the already described example embodiments, omitting explanations for other overlapping parts as appropriate.

### (Terminal Configuration)

First, with reference to FIG. 15, a terminal configuration of the eighth information processing system 10 will be described. FIG. 15 is a block diagram illustrating the terminal configuration of the eighth information processing system. Note that in FIG. 15, the same reference numerals are used for the same components as those illustrated in FIG. 2.

In FIG. 15, the eighth information processing system 10 includes the first terminal 100 and the third terminal 300. That is, compared with the configuration described in the first example embodiment (see FIG. 2), the eighth information processing system 10 does not include the second terminal 200. The first terminal 100 and the third terminal 300 are connected, for example, via wireless communication, and are configured to transmit and receive information to and from each other.

The first terminal 100 includes the first acquisition unit 110 as a processing block for realizing its functions. The first acquisition unit 110 is configured to acquire the first echo information indicating an echo reverberating inside the target's first ear. The first acquisition unit 110, for example, controls the first terminal 100 worn in the target's first ear to acquire the first echo signal including the characteristics/features of the target's first ear (specifically, the characteristics/features of the internal shape of the ear). More specifically, the first acquisition unit 110 controls the first terminal 100 to transmit a sound wave into the target's first ear, and acquires the first echo signal based on the echo of the transmitted sound wave.

The third terminal 300 includes, as processing blocks for realizing its functions, the registered information storage unit 310 and the information output unit 320. The registered information storage unit 310 stores the registered echo information, which indicates an echo and which is registered in advance. The information output unit 320 is configured to output the relationship information about the relationship between the target's first ear and the first acquisition unit 110. The information output unit 320 is configured to output the relationship information, based on the registered echo information stored in the registered information storage unit 310 and the first echo information acquired by the first acquisition unit 110. For example, the information output unit 320 may determine the relationship between the first ear and the first acquisition unit 110 by matching the first echo information to the registered echo information, and may output the relationship information corresponding to the determination result.

### (Operation Flow)

Next, with reference to FIG. 16, an operation flow in the eighth information processing system 10 will be described. FIG. 16 is a flowchart illustrating the operation flow in the eighth information processing system.

As illustrated in FIG. 16, when the operation is started in the eighth information processing system 10, the first acquisition unit 110 in the first terminal 100 first acquires the first echo information indicating an echo reverberating in the target's first ear (Step S801).

Then, the information output unit 320 determines the relationship between the target's first ear and the first acquisition unit 110 (Step S802). The information output unit 320 determines the aforementioned relationship, based on the registered echo information stored in the registered information storage unit 310 and the first echo information acquired by the first acquisition unit 110. The information output unit 320 then outputs the relationship information corresponding to the determination result regarding the relationship (Step S803).

### (Technical Effect)

Next, a technical effect obtained by the eighth information processing system 10 will be described.

As described in FIG. 15 and FIG.16, in the eighth information processing system 10, the relationship information about the relationship between the first ear and the first acquisition unit 110 is outputted based on the first echo information acquired from the first ear. This makes it possible to understand the relationship between the first ear and the first acquisition unit 110, even in a case where the terminal is worn only in the first ear (i.e., only in one ear).

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal. The program may be provided to a user in a form of SaaS (Software as a Service), for example.

### <Supplementary Notes>

The example embodiments described above may be further described as, but not limited to, the following Supplementary Notes below.

### (Supplementary Note 1)

An information processing system according to Supplementary Note 1 is an information processing system including: a first acquisition unit that acquires first echo information indicating an echo reverberating in a first ear of a target; a second acquisition unit that acquires second echo information indicating an echo reverberating in a second ear of the target; a storage unit that stores registered echo information, which indicates an echo and which is registered in advance; and an information output unit that outputs information about at least one of a relationship between the first ear and the first acquisition unit and a relationship between the second ear and the second acquisition unit, based on the registered echo information and at least one of the first echo information and the second echo information.

### (Supplementary Note 2)

An information processing system according to Supplementary Note 2 is the information processing system according to Supplementary Note 1, further including: an authentication unit that performs authentication processing on the target, based on the registered echo information and at least one of the first echo information and the second echo information.

### (Supplementary Note 3)

An information processing system according to Supplementary Note 3 is the information processing system according to Supplementary Note 1 or 2, wherein the information output unit outputs information indicating incorrect wearing of the first acquisition unit and the second acquisition unit, based on the registered echo information and at least one of the first echo information and the second echo information.

### (Supplementary Note 4)

An information processing system according to Supplementary Note 4 is the information processing system according to Supplementary Note 3, wherein the storage unit stores first registered echo information corresponding to the first ear and second registered echo information corresponding to the second ear, and the information output unit outputs the information indicating the incorrect wearing, in a case where the first echo information matches the second registered echo information and the second echo information matches the first registered echo information.

### (Supplementary Note 5)

An information processing system according to Supplementary Note 5 is the information processing system according to Supplementary Note 3 or 4, wherein the first acquisition unit and the second acquisition unit are configured to output sound, and the information processing system further includes an output control unit that controls a sound outputted by the first acquisition unit and a sound outputted by the second acquisition unit to be switched with each other, in a case where the output unit outputs the information indicating the incorrect wearing.

### (Supplementary Note 6)

An information processing system according to Supplementary Note 6 is the information processing system according to any one of Supplementary Notes 3 to 5, wherein the first acquisition unit and the second acquisition unit are configured to collect sound, and the information processing system further includes a sound collection control unit that controls a sound collected by the first acquisition unit and a sound collected by the second acquisition unit to be switched with each other, in a case where the output unit outputs the information indicating the incorrect wearing.

### (Supplementary Note 7)

An information processing system according to Supplementary Note 7 is the information processing system according to any one of Supplementary Notes 1 to 6, wherein a plurality of pairs of first acquisition units and second acquisition units are provided, and the information output unit outputs information indicating mismatched pairing of the first acquisition unit and the second acquisition unit, based on the registered echo information and at least one of the first echo information and the second echo information.

### (Supplementary Note 8)

An information processing system according to Supplementary Note 8 is an information processing system including: an acquisition unit that acquires echo information indicating an echo reverberating in a first ear of a target; a storage unit that stores registered echo information, which indicates an echo and which is registered in advance; and an information output unit that outputs information about a relationship between the first ear and the acquisition unit, based on the registered echo information and the echo information.

### (Supplementary Note 9)

An information processing method according to Supplementary Note 9 is an information processing method including: acquiring first echo information indicating an echo reverberating in a first ear of a target, via a first acquisition unit; acquiring second echo information indicating an echo reverberating in a second ear of the target, via a second acquisition unit; and outputting information about at least one of a relationship between the first ear and the first acquisition unit and a relationship between the second ear and the second acquisition unit, based on registered echo information, which indicates an echo and which is registered in advance and at least one of the first echo information and the second echo information.

### (Supplementary Note 10)

A recording medium according to Supplementary Note 10 is a recording medium on which a computer program that allows execution of an information processing method is recorded, the information processing method including: acquiring first echo information indicating an echo reverberating in a first ear of a target, via a first acquisition unit; acquiring second echo information indicating an echo reverberating in a second ear of the target, via a second acquisition unit; and outputting information about at least one of a relationship between the first ear and the first acquisition unit and a relationship between the second ear and the second acquisition unit, based on registered echo information, which indicates an echo and which is registered in advance, and at least one of the first echo information and the second echo information.

### (Supplementary Note 11)

A computer program according to Supplementary Note 11 is a computer program that allows execution of an information processing method, the information processing method including: acquiring first echo information indicating an echo reverberating in a first ear of a target, via a first acquisition unit; acquiring second echo information indicating an echo reverberating in a second ear of the target, via a second acquisition unit; and outputting information about at least one of a relationship between the first ear and the first acquisition unit and a relationship between the second ear and the second acquisition unit, based on registered echo information, which indicates an echo and which is registered in advance, and at least one of the first echo information and the second echo information.

### (Supplementary Note 12)

An information processing system according to Supplementary Note 12 is the information processing system according to Supplementary Note 8, further including: an authentication unit that performs authentication processing on the target, based on the registered echo information and the echo information.

### (Supplementary Note 13)

An information processing system according to Supplementary Note 13 is the information processing system according to Supplementary Note 8 or 12, wherein the information output unit outputs information indicating incorrect wearing of the acquisition unit, based on the registered echo information and the echo information.

### (Supplementary Note 14)

An information processing method according to Supplementary Note 14 is an information processing method including: acquiring echo information indicating an echo reverberating in a first ear of a target, via an acquisition unit; and outputting information about a relationship between the first ear and the acquisition unit, based on registered echo information, which indicates an echo and which is registered in advance, and the echo information.

### (Supplementary Note 15)

A recording medium according to Supplementary Note 15 is a recording medium on which a computer program that allows execution of an information processing method is recorded, the information processing method including: acquiring echo information indicating an echo reverberating in a first ear of a target, via an acquisition unit; and outputting information about a relationship between the first ear and the acquisition unit, based on registered echo information, which indicates an echo and which is registered in advance, and the echo information.

### (Supplementary Note 16)

A computer program according to Supplementary Note 16 is a computer program that allows execution of an information processing method, the information processing method including: acquiring echo information indicating an echo reverberating in a first ear of a target, via an acquisition unit; and outputting information about a relationship between the first ear and the acquisition unit, based on registered echo information, which indicates an echo and which is registered in advance, and the echo information.

The present disclosure is allowed to be changed, if desired, without departing from the essence or spirit of this disclosure which can be read from the claims and the entire specification. An information processing system, an information processing method, and a recording medium with such changes are also intended to be within the technical scope of the present disclosure.

### Description of Reference Codes

10 Information processing system
11 Processor
100 First terminal
110 First acquisition unit
200 Second terminal
210 Second acquisition unit
300 Third terminal
310 Registered information storage unit
320 Information output unit
330 Authentication unit
340 Output control unit
350 Sound collection control unit

## Claims

1. An information processing system comprising:
a first acquisition unit that acquires first echo information indicating an echo reverberating in a first ear of a target;
a second acquisition unit that acquires second echo information indicating an echo reverberating in a second ear of the target;
a storage unit that stores registered echo information, which indicates an echo and which is registered in advance; and
an information output unit that outputs information about at least one of a relationship between the first ear and the first acquisition unit and a relationship between the second ear and the second acquisition unit, based on the registered echo information and at least one of the first echo information and the second echo information.

2. The information processing system according to Claim 1, further comprising:
an authentication unit that performs authentication processing on the target, based on the registered echo information and at least one of the first echo information and the second echo information.

3. The information processing system according to Claim 1 or 2, wherein
the information output unit outputs information indicating incorrect wearing of the first acquisition unit and the second acquisition unit, based on the registered echo information and at least one of the first echo information and the second echo information.

4. The information processing system according to Claim 3, wherein
the storage unit stores first registered echo information corresponding to the first ear and second registered echo information corresponding to the second ear, and
the information output unit outputs the information indicating the incorrect wearing, in a case where the first echo information matches the second registered echo information and the second echo information matches the first registered echo information.

5. The information processing system according to Claim 3, wherein
the first acquisition unit and the second acquisition unit are configured to output sound, and
the information processing system further comprises an output control unit that controls a sound outputted by the first acquisition unit and a sound outputted by the second acquisition unit to be switched with each other, in a case where the output unit outputs the information indicating the incorrect wearing.

6. The information processing system according to Claim 3, wherein
the first acquisition unit and the second acquisition unit are configured to collect sound, and
the information processing system further comprises a sound collection control unit that controls a sound collected by the first acquisition unit and a sound collected by the second acquisition unit to be switched with each other, in a case where the output unit outputs the information indicating the incorrect wearing.

7. The information processing system according to Claim 1 or 2, wherein
a plurality of pairs of first acquisition units and second acquisition units are provided, and
the information output unit outputs information indicating mismatched pairing of the first acquisition unit and the second acquisition unit, based on the registered echo information and at least one of the first echo information and the second echo information.

8. An information processing system comprising:
an acquisition unit that acquires echo information indicating an echo reverberating in a first ear of a target;
a storage unit that stores registered echo information, which indicates an echo and which is registered in advance; and
an information output unit that outputs information about a relationship between the first ear and the acquisition unit, based on the registered echo information and the echo information.

9. An information processing method comprising:
acquiring first echo information indicating an echo reverberating in a first ear of a target, via a first acquisition unit;
acquiring second echo information indicating an echo reverberating in a second ear of the target, via a second acquisition unit; and
outputting information about at least one of a relationship between the first ear and the first acquisition unit and a relationship between the second ear and the second acquisition unit, based on registered echo information, which indicates an echo and which is registered in advance, and at least one of the first echo information and the second echo information.

10. A recording medium on which a computer program that allows execution of an information processing method is recorded, the information processing method including:
acquiring first echo information indicating an echo reverberating in a first ear of a target, via a first acquisition unit;
acquiring second echo information indicating an echo reverberating in a second ear of the target, via a second acquisition unit; and
outputting information about at least one of a relationship between the first ear and the first acquisition unit and a relationship between the second ear and the second acquisition unit, based on registered echo information, which indicates an echo and which is registered in advance, and at least one of the first echo information and the second echo information.
